# EUROPÄISCHE PATENTSCHRIFT

(11) **EP 0 876 064 B1**
(45) Veröffentlichungstag und Bekanntmachung des Hinweises auf die Patenterteilung: **22.03.2006**
(21) Anmeldenummer: 98201204.9
(22) Anmeldetag: 15.04.1998
(51) Int. Cl.: H04N 9/83

(54) **Schaltungsanordnung zur Farbsignal-Verarbeitung**
Colour signal processing circuit
Circuit de traitement de signal couleur

(30) Priorität: 25.04.1997 DE 19717553; 17.07.1997 DE 19730619
(43) Veröffentlichungstag der Anmeldung: 04.11.1998
(73) Patentinhaber: Philips Intellectual Property & Standards GmbH, 20099 Hamburg (DE); Koninklijke Philips Electronics N.V., 5621 BA Eindhoven (NL); MATSUSHITA ELECTRIC INDUSTRIAL CO., LTD., Kadoma-shi, Osaka 571-8501 (JP)
(72) Erfinder: Heinemann, Herbert, Röntgenstrasse 24, 22335 Hamburg (DE); Uchiyama, Shin-Ichi, Röntgenstrasse 24, 22335 Hamburg (DE)
(74) Vertreter: von Laue, Hanns-Ulrich

(56) Entgegenhaltungen:
- EP-A- 0 752 791
- US-A- 4 991 026

## Beschreibung

Die Erfindung betrifft eine Schaltungsanordnung zur Verarbeitung eines von einem Aufzeichnungsträger, vorzugsweise einem Videoband, wiedergegebenen, einem Träger mit einer ersten Trägerfrequenz aufmodulierten Farbsignals (Color-Under-Signal), in welcher das der ersten Trägerfrequenz aufmodulierte Farbsignal einem ersten Mischer zugeführt wird, mittels welchem das Farbsignal mittels Mischung mit einem ersten Mischsignal auf eine zweite Trägerfrequenz umgesetzt wird und dessen Ausgangssignal einer Kammfilteranordnung zugeführt wird, deren Ausgangssignal einem zweiten Mischer zugeführt wird, mittels welchem das kammgefilterte Signal mittels Mischung mit einem zweiten Mischsignal auf eine dritte Trägerfrequenz umgesetzt wird.

Aus der EP-A-0 752 791 ist eine Schaltungsanordnung bekannt, welche eines von einem Aufzeichnungsträger, insbesondere einem Videorekorder, wiedergegebenen einem Träger mit einer ersten Trägerfrequenz aufmodulierten Farbsignal einer Kammfilterung unterzieht und eine Umsetzung der Farbträgerfrequenz auf eine Frequenz entsprechend einer Wiedergabenorm des Farbsignals vornimmt. Beispielsweise bei der VHS-Norm ist das Farbsignal einem Farbträger mit einer Frequenz von 625 kHz bei der Aufzeichnung auf das Band aufmoduliert. Dieses Signal muß beispielsweise gemäß der NTSC-Norm wieder auf die Farbträgerfrequenz von 3,58 MHz umgesetzt werden. Neben dieser Umsetzung der Farbträgerfrequenz nimmt diese bekannte Schaltungsanordnung außerdem eine Kammfilterung vor. Dabei ist ein erster Mischer vorgesehen, der die Farbträgerfrequenz auf einen Zwischenwert umsetzt, auf welchem auch die Kammfilterung vorgenommen wird. Nach der Kammfilterung wird mittels eines zweiten Mischvorgangs die Umsetzung auf die Farbträgerfrequenz entsprechend der Wiedergabenorm vorgenommen. Die Kammfilterung dient dazu, Übersprecheffekte von Nachbarspuren auf dem Aufzeichnungträger zu unterdrücken. Mittels der beiden Mischer wird erreicht, daß die Kammfilterung einerseits im frequenz- bzw. phasengeregelten Bereich der Schaltungsanordnung vorgenommen wird und daß andererseits der Schaltungsaufwand noch gering bleibt, da das Farbsignal noch mit einer Trägerfrequenz unterhalb der zur Wiedergabe vorgesehenen Trägerfrequenz vorliegt.

Bei dieser Schaltungsanordnung sowie bei anderen Schaltungsanordnungen, bei denen eine Kammfilterung mit anderen Frequenzen vorgenommen wird, besteht das Problem, daß die Periodendauer der Schwingung des Trägers, auf den das Farbsignal aufmoduliert ist, nicht ein ganzzahliges Vielfaches der Dauer einer Bildzeile des Farbsignals ist. Dadurch entsteht das Problem, daß die Kammfilterung mit zeitlich zueinander versetzten Farbträgerschwingungen vorgenommen wird, d.h. die Schwingungen des Farbträgers zu filternder Bildzeilen sind bei der Kammfilterung gegeneinander phasenverschoben. Damit wird keine optimale Filterung erzielt. Das Problem, daß die Periodendauer des Farbsignalträgers nicht ein ganzzahliges Vielfaches der Zeilendauer darstellt, tritt bei allen drei Trägerfrequenzen auf.

Es ist Aufgabe der Erfindung, eine Schaltungsanordnung der eingangs genannten Art anzugeben, bei der dieses Problem beseitigt ist.

Diese Aufgabe ist erfindungsgemäß durch eine Schaltungsanordnung nach Anspruch 1 gelöst, worin das erste Mischsignal jeweils nach einer vorgebbaren Anzahl von Bildzeilen des Farbsignals mittels eines ersten Phasenschiebers einer Phasenverschiebung einer vorgebbaren Größe uriterzogen wird, wobei die Phasenverschiebung jeweils zusätzlich zu den zuvor erfolgten Phasenverschiebungen vorgenommen wird und so gewählt ist, daß eine Kompensation des ggf. nicht ganzzahligen Verhältnisses der Dauer einer Bildzeile und der Periodendauer des der ersten Trägerfrequenz aufmodulierten Farbsignals erzielt wird, so daß am Eingang der Kammfilteranordnung zu Beginn der nachfolgenden Bildzeile eine Periode der Farbträgerschwingung beginnt, und daß das zweite Mischsignal zu den gleichen Zeitpunkten mittels eines zweiten Phasenschiebers einer Phasenverschiebung der betragsmäßig gleichen Größe mit umgekehrtem Vorzeichen unterzogen wird.

Bei der erfindungsgemäßen Schaltungsanordnung werden die beiden Mischer nicht nur zur Umsetzung der Frequenz des Farbträgers eingesetzt, sondern im Zusammenspiel mit zwei Phasenschiebern auch dazu herangezogen, eine Phasenverschiebung der Farbträgerschwingung in dem Bereich der Schaltungsanordnung vorzunehmen, in dem die Kammfilteranordnung angeordnet ist. Da die Kammfilteranordnung zwischen die beiden Mischer geschaltet ist, wird die Phasenverschiebung vorteilhaft mittels des ersten Mischers vorgenommen und mittels des zweiten Mischers zur korrekten Wiedergabe des Farbsignals rückgängig gemacht.

Dazu wird nach einer jeweils vorgebbaren Anzahl von Bildzeilen des Farbsignals, welche von der Farbsignalnorm abhängt, mittels eines ersten Phasenschiebers eine Phasenverschiebung des ersten Mischsignals einer vorgebbaren Größe vorgenommen. Dabei hängt diese vorgebbare Größe wiederum von der Norm des Farbsignals ab. Durch diese vorgenommene Phasenverschiebung des Mischsignals wird im Ergebnis das Ausgangssignal, das der erste Mischer liefert, ebenfalls einer solchen Phasenverschiebung unterzogen. Die vorgebbare Anzahl von Bildzeilen und die Größe der Phasenverschiebung werden dabei so gewählt, daß die Farbträgerschwingungen zu Beginn der Bildzeilen jeweils mit gleicher Phasenlage die Kammfilteranordnung erreichen. Damit wird erzielt, daß in der Kammfilteranordnung eine phasenrichtige Kammfilterung des dem Farbträger aufmodulierten Farbsignals vorgenommen wird. Damit wird eine optimale Kammfilterung erzielt.

Damit das Ausgangssignal der Schaltungsanordnung nicht ebenfalls die gleichen Phasensprünge aufweist, wird das zweite Mischsignal mittels eines zweiten Phasenschiebers zu den gleichen Zeitpunkten einer inversen Phasenverschiebung unterzogen. Damit wird in dem zweiten Mischer zu den Zeitpunkten, zu denen in dem ersten Mischer die Phasenverschiebung vorgenommen wird, die dort vorgenommene Phasenverschiebung wieder rückgängig gemacht. Damit ist das Ausgangssignal wiederum frei von Phasenverschiebungen und kann störungsfrei wiedergegeben werden.

Die oben beschriebene Phasenverschiebung, die mittels des ersten Phasenschiebers in dem ersten Mischer vorgenommen wird und die in dem zweiten Mischer rückgängig gemacht wird, wird nach der vorgebbaren Anzahl von Bildzeilen jeweils zusätzlich vorgenommen. Wird beispielsweise nach einer vorgebbaren Anzahl von Bildzeilen eine Phasenverschiebung von 90 Grad vorgenommen, so wird die Phasenverschiebung jeweils nach der vorgebbaren Anzahl um 90 Grad erhöht. Nach jeder vorgebbaren Anzahl von Bildzeilen wird die Phasenverschiebung um 90 Grad weitergeschaltet, so daß im Ergebnis die Phasenverschiebung 90 Grad, 180 Grad, 270 Grad usw. lautet, wobei jeweils nach der vorgebbaren Anzahl von Bildzeilen die Phasenverschiebung erhöht wird.

Im Ergebnis wird damit eine optimale Kammfilterung mittels der Kammfilteranordnung mit phasenrichtigen Farbträgersignalen ermöglicht, ohne daß in dem Ausgangssignal Störeffekte durch die Phasenverschiebung auftreten.

Die vorgegebene Größe der Phasenverschiebung, die jeweils nach einer vorgebbaren Anzahl von Bildzeilen zusätzlich vorgenommen wird, wird vorteilhaft, wie gemäß einer Ausgestaltung der Erfindung gemäß Anspruch 2 vorgesehen ist, so gewählt, daß jeweils die Farbträgerschwingungen von Bildpunkten jeweils gleicher Position innerhalb der Bildzeilen phasenrichtig mittels der Kammfilteranordnung gefiltert werden. Vorzugsweise werden dabei die Perioden der Farbträgerschwingungen von den jeweils ersten aktiven Bildpunkten der Bildzeilen so phasenkorrigiert, daß sie optimal kammgefiltert werden können.

Mittels der weiteren Ausgestaltung gemäß Anspruch 3 wird erzielt, daß die vorgenommenen Phasenverschiebungen, die im Ergebnis keine Phasenverschiebung verursachen, in den Übergangszeiten jedoch eventuell Störungen verursachen könnten, während solcher Zeiten vorgenommen werden, in denen die Bildzeilen keinen Bildinhalt beinhalten, so daß in dem aktiven Bildinhalt in jedem Falle keine Störungen auftreten können.

Hierzu eignen sich vorzugsweise, wie gemäß Anspruch 4 vorgesehen ist, diejenigen Zeiten, in denen in den Bildzeilen die Horizontalsynchronimpulse auftreten.

Gemäß Anspruch 5 beträgt die oben erläuterte vorgebbare Anzahl von Bildzeilen, wie gemäß Anspruch 5 vorgesehen ist, jeweils eine Bildzeile. Nach jeder Bildzeile wird eine additionelle Phasenverschiebung des ersten Mischsignals und damit des Ausgangssignals des ersten Mischers von +90 Grad vorgenommen. Es wird also zu Beginn jeder Bildzeile die Phasenverschiebung um +90 Grad erhöht. Mittels des zweiten Mischers wird in entsprechender Weise die Phasenverschiebung rückgängig gemacht. Bei dem Signal der NTSC-Norm wird bei diesen Werten die oben beschriebene optimale Kammfilterung erzielt.

Wie gemäß Anspruch 6 vorgesehen ist, betragen diese Werte für ein Farbsignal der PAL-Norm jeweils zwei Bildzeilen, nach denen eine Phasenverschiebung von +90 Grad mittels des ersten Mischers vorgenommen wird.

Auch bei Schaltungsanordnungen, bei denen nur ein Mischer vorgesehen ist, und damit die Kammfilterung also entweder auf der Farbträgerfrequenz stattfindet, mit der das Farbsignal aufgezeichnet wurde oder auf der Farbträgerfrequenz stattfindet, die der Wiedergabenorm entspricht, ist meist ein Mischer vorgesehen dem das wiedergegebene Farbsignal zugeführt wird, und der dazu dient, auf dem Band aufgezeichnete Phasenverschiebungen des Farbsignals rückgängig zu machen. Es sind zur Verminderung der Übersprecheffekte auf dem Band je nach Aufzeichnungsnorm verschiedene Phasensprünge des Farbsignals vorgesehen. Daher ist im Regelfalle ohnehin ein Mischer erforderlich, der diese auf dem Band aufgezeichneten Phasensprünge rückgängig macht. Daher ist der erste Mischer, wie gemäß Anspruch 7 vorgesehen ist, der erfindungsgemäßen Anordnung sowohl für die erfindungsgemäß vorgesehenen Phasenverschiebungen des Farbsignals zur optimalen Kammfilterung wie auch zur Rückgängigmachung der auf dem Band aufgezeichneten Phasenverschiebungen einsetzbar. Damit erzeugt der erste Mischer zwei Effekte, so daß in der Schaltungsanordnung gemäß der Erfindung so gut wie kein zusätzlicher Schaltungsaufwand für die optimale Kammfilterung eintritt.

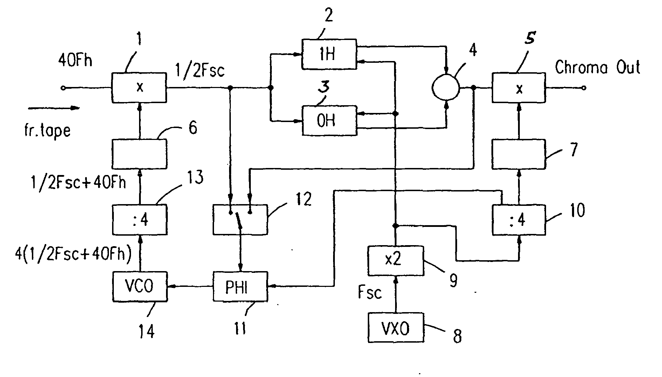

Nachfolgend wird ein Ausführungsbeispiel der Erfindung anhand der Zeichnung näher erläutert.

Die einzige Figur der Zeichnung zeigt ein Blockschaltbild einer erfindungsgemäßen Schaltungsanordnung zur Umsetzung und Kammfilterung eines Signals der NTSC-Norm.

Wie bei den meisten Aufzeichnungsnormen, beispielsweise auch der VHS-Norm, vorgesehen, ist das Signal auf dem Band mit einer sogenannten Color-Under-Farbträgerfrequenz aufgezeichnet. Dies bedeutet, daß die Frequenz des Farbträgers unterhalb derjenigen Frequenz des Trägers für das Nominanzsignal liegt. Das Farbsignal ist also mit einer relativ niederfrequenten Farbträgerschwingung von 625 kHz aufgezeichnet. Es muß daher wiedergabeseitig auf diejenige Farbträgerfrequenz umgesetzt werden, die gemäß der Wiedergabenorm vorgesehen ist. In dem Beispiel gemäß der Figur wird davon ausgegangen, daß es sich bei der Wiedergabenorm um die NTSC-Norm handelt. Mittels der Schaltungsanordnung ist also die Farbträgerschwingung von 625 kHz auf 3.576 MHz entsprechend der NTSC-Norm umzusetzen. Außerdem wird eine Kammfilterung vorgenommen, welche Übersprecheffekte der Farbsignale von Nachbarspuren auf dem Band unterdrückt. Diese Kammfilterung gelingt nur dann optimal, wenn die Farbträgerschwingungen der zu filternden Bildzeilen phasenrichtig der Kammfilteranordnung zugeführt werden.

In der Figur wird das von einem Aufzeichnungsträger wiedergegebene Farbsignal einem ersten Mischer 1 zugeführt. Die Farbträgerfrequenz gemäß der Aufzeichnungsnorm beträgt in diesem Beispiel das 40fache der Horizontalfrequenz des Farbsignals. Mittels des ersten Mischers wird eine Umsetzung der Farbträgerfrequenz auf den halben Wert entsprechend der Wiedergabenorm vorgesehen, der in der Figur mit 1/2 Fsc gekennzeichnet ist. Das Ausgangssignal des ersten Mischers 1 gelangt zu einer Kammfilteranordnung, welche mittels zwei Verzögerungselementen 2 und 3 und einer Überlagerungsstufe 4 aufgebaut ist. Dabei erzeugt das erste Verzögerungselement eine Verzögerung um die Dauer einer Bildzeile und das zweite Verzögerungselement keine Verzögerung. Das zweite Verzögerungselement ist dazu vorgesehen, das Farbsignal den gleichen Amplituden- und Phasenveränderungen zu unterziehen wie die erste Verzögerungsanordnung 2.

Das Ausgangssignal der Überlagerungsstufe 4 der Kammfilteranordnung gelangt auf einen zweiten Mischer 5, mittels dessen eine Umsetzung der Farbträgerfrequenz auf die entsprechend der Wiedergabenorm vorgesehene Farbträgerfrequenz vorgenommen wird. Es wird also eine Umsetzung auf FSC vorgenommen, welche für Signale der NTSC-Norm 3,576 MHz beträgt.

Dem ersten Mischer 1 wird ein erstes Mischsignal zugeführt, das mittels eines ersten Phasenschiebers 6 zu Beginn jeder Bildzeile einer Phasenverschiebung von 90 Grad vorgenommen wird. Es wird also mittels des ersten Phasenschiebers zu Beginn jeder Bildzeile eine zusätzliche Phasenverschiebung von 90 Grad erzeugt. In entsprechender Weise wird das dem zweiten Mischer 5 zugeführte Mischsignal mittels eines zweiten Phasenschiebers 7 der gleichen Phasenverschiebung, jedoch mit umgekehrtem Vorzeichen, unterzogen. Damit wird erreicht, daß das der Kammfilteranordnung zugeführte Signal so gestaltet ist, daß in jeder Bildzeile die Farbträgerschwingungen mit gleicher Phasenlage vorliegen. Damit werden in der Kammfilteranordnung die Farbträgerschwingungen gleichphasig gefiltert, so daß eine optimale Filterung erzielt wird.

Da die Phasensprünge bei der Wiedergabe Probleme bereiten könnten, werden sie mittels des zweiten Phasenschiebers 7 und des zweiten Mischers 5 wieder rückgängig gemacht. Die optimale Kammfilterung wird hierdurch nicht gestört.

Die für die Mischsignale erforderlichen Frequenzen werden aus einem Quartzoszillator 8 abgeleitet, welcher ein Signal der Frequenz FSC liefert, also derjenigen Frequenz, die die Farbträgerschwingung am Ausgang des zweiten Mischers 5 aufweisen soll.

Das Ausgangssignal des spannungsgesteuerten Oszillators wird nach Multiplikation mit dem Faktor 2 mittels eines Multiplikators 9 einerseits dazu eingesetzt, die beiden Verzögerungsanordnungen 2 und 3 der Kammfilteranordnung zu takten.

Andererseits wird das Ausgangssignal des Multiplizierers 2 nach Division durch den Quotienten 4 mittels eines Teilers 10 als zweites Mischsignal herangezogen und dem zweiten Phasenschieber 7 zugeführt.

Das Ausgangssignal des Teilers 10 gelangt ferner an einen Phasenkomparator 11, dem außerdem entweder das Ausgangssignal des ersten Mischers oder das Ausgangssignal der Kammfilterung zugeführt wird. Die Umschaltung zwischen diesen beiden Signalen wird mittels eines Schalters 12 vorgenommen.

In jedem Falle gelangt also an den Phasenschieber ein Signal der Frequenz 1/2 Fsc an beiden Eingängen. Eines der Signale ist aus dem Quarzoszillator 8 abgeleitet, das andere Signal weist die Schwingung des wiedergegebenen Farbsignals bzw. dessen Trägers auf. Aus den Phasenverschiebungen dieser beiden Signale generiert der Phasenkomparator 11 ein Steuersignal, mittels dessen ein spannungsgesteuerter Oszillator 14 angesteuert wird.

Der spannungsgesteuerte Oszillator 14 arbeitet mit einer Sollfrequenz von 4x(1/2 Fsc + 40 Fh). Diese Frequenz wird mittels eines dem spannungsgesteuerten Oszillator 13 nachgeschalteten Teilers 13 auf ein Viertel der Frequenz herabgesetzt, also auf den Wert 1/2 Fsc + 40 Fh.

Dieses Signal wird als erstes Mischsignal dem ersten Phasenkomparator 6 zugeführt, der dieses Signal unter Hinzufügung der oben erläuterten Phasenverschiebungen dem ersten Mischer 1 zuführt. Durch die gewählte Frequenz 1/2 Fsc + 40 Fh wird durch Überlagerung mit dem Signal der Frequenz 40 Fh, wie es vom Aufzeichnungsträger kommt, eine Umsetzung auf die Frequenz 1/2 Fsc erzielt.

Durch Ansteuerung des spannungsgesteuerten Oszillators 14 durch das Ausgangssignal des Phasenkomparators 11 gelingt zusätzlich eine Anpassung des ersten Mischsignals an ggf. in dem Wiedergabesignal auftretende Phasenverschiebungen der Farbträgerfrequenz. Durch die Stellung des Umschalters 12 kann dabei für den Vergleich zwischen dem Ausgangssignal des ersten Mischers und dem Ausgangssignal der Kammfilteranordnung gewählt werden. Dies bedeutet, daß für den Phasenvergleich immer Eingangssignale mit geringen Übersprechanteilen genutzt werden können. Enthält z.B. das Eingangssignal hohe Übersprechanteile, z.B. im Longplay Mode, ist die Störbefreiung durch das Kammfilter erforderlich. Im Normalmode bei geringeren Übersprechanteilen ist es jedoch wegen der Regelzeiten vorteilhaft, das Signal für den Phasenkomparator vor dem Kammfilter abzugreifen.

Im Ergebnis wird mittels der in der Figur dargestellten Schaltungsanordnung erreicht, daß zu Beginn jeder Bildzeile mittels des ersten Phasenschiebers 6 eine Verschiebung des Mischsignals um jeweils 90 Grad vorgenommen wird. Damit hat das Eingangssignal der Kammfilteranordnung zu jeder Bildzeile gleiche Phasenlage, d.h. insbesondere daß die Farbträgerschwingungen jeweils mit gleicher Phasenlage auftreten. Damit kann auch am Ausgang der beiden Verzögerungsanordnungen 2 und 3 in der Überlagerungsstufe 4 jeweils eine phasenrichtige Überlagerung der Farbträgerschwingungen erfolgen. Die vorgenommenen Phasensprünge werden mittels des zweiten Phasenschiebers 7 und der zweiten Mischstufe wieder rückgängig gemacht, so daß das Ausgangssignal keine Phasensprünge mehr aufweist, gleichwohl aber optimal kammgefiltert ist.

Die in dem Ausführungsbeispiel gewählten Werte gelten für ein Farbsignal der NTSC-Norm. Beispielsweise für ein Farbsignal der PAL-Norm würde eine Phasenverschiebung zu Beginn jeder zweiten Bildzeile von 90 Grad vorgenommen werden.

## Patentansprüche

1. Schaltungsanordnung zur Verarbeitung eines von einem Aufzeichnungsträger, vorzugsweise einem Videoband, wiedergegebenen, einem Träger mit einer ersten Trägerfrequenz aufmodulierten Farbsignals (Color-Under-Signal), in welcher das der ersten Trägerfrequenz aufmodulierte Farbsignal einem ersten Mischer (1) der Schaltungsanordnung zugeführt wird, mittels welchem das Farbsignal mittels Mischung mit einem ersten Mischsignal auf eine zweite Trägerfrequenz umgesetzt wird und dessen Ausgangssignal einer Kammfilteranordnung (2, 3, 4) der Schaltungsanordnung zugeführt wird, deren Ausgangssignal einem zweiten Mischer (5) der Schaltungsanordnung zugeführt wird, mittels welchem das kammgefilterte Signal mittels Mischung mit einem zweiten Mischsignal auf eine dritte Trägerfrequenz umgesetzt wird, **dadurch gekennzeichnet,**
**daß** das erste Mischsignal jeweils nach einer vorgebbaren Anzahl von Bildzeilen des Farbsignals mittels eines ersten Phasenschiebers (6) der Schaltungsanordnung einer ertsen Phasenverschiebung einer vorgebbaren Größe unterzogen wird, wobei die erste Phasenverschiebung jeweils zusätzlich zu den zuvor erfolgten Phasenverschiebungen vorgenommen wird und so gewählt ist, daß eine Kompensation des ggf. nicht ganzzahligen Verhältnisses der Dauer einer Bildzeile und der Periodendauer des der ersten Trägerfrequenz aufmodulierten Farbsignals erzielt wird, so daß am Eingang der Kammfilteranordnung (2, 3, 4) zu Beginn einer nachfolgenden Bildzeile, die auf die genannte vorgebbare Anzahl von Bildzeiten folgt, eine Periode der Farbträgerschwingung beginnt, und daß das zweite Mischsignal zu den gleichen Zeitpunkten mittels eines zweiten Phasenschiebers (7) der Schaltungsanordnung einer zweiten Phasenverschiebung der betragsmäßig gleichen Größe wie die erste Phasenverschiebung mit deren umgekehrtem Vorzeichen unterzogen wird.

2. Schaltungsanordnung nach Anspruch 1, **dadurch gekennzeichnet, daß** die gennante erste Phasenverschiebung derart eingerichtet ist, daß zu Beginn der nachfolgenden Bildzeile eine einem vorgegebenen Bildpunkt der Bildzeile, vorzugsweise dem ersten aktiven Bildpunkt der Bildzeile, zugeordnete Periode der Farbträgerschwingung beginnt.

3. Schaltungsanordnung nach Anspruch 1, **dadurch gekennzeichnet,**
**daß** die erste Phasenverschiebung während Zeiten vorgenommen wird, in denen die Bildzeilen keinen Bildinhalt aufweisen.

4. Schaltungsanordnung nach Anspruch 1, **dadurch gekennzeichnet,**
**daß** die erste Phasenverschiebung während in den Bildzeilen vorgesehener Horizontalsynchronimpulse vorgenommen wird.

5. Schaltungsanordnung nach Anspruch 1, **dadurch gekennzeichnet,**
**daß** zur Verarbeitung eines in Color-Under-Frequenzlage vorliegenden Farbsignals der NTSC-Norm mittels des ersten Phasenschiebers (6) nach jeder Bildzeile eine Phasenverschiebung des ersten Mischsignals von +90 Grad vorgenommen wird und
**daß** nach denselben Bildzeilen mittels des zweiten Phasenschiebers (7) eine Phasenverschiebung des zweiten Mischsignals von -90 Grad vorgenommen wird.

6. Schaltungsanordnung nach Anspruch 1, **dadurch gekennzeichnet,**
**daß** zur Verarbeitung eines in Color-Under-Frequenzlage vorliegenden Farbsignals der PAL-Norm mittels des ersten Phasenschiebers (6) nach jeder zweiten Bildzeile eine Phasenverschiebung des ersten Mischsignals von +90 Grad vorgenommen wird und daß nach denselben Bildzeilen mittels des zweiten Phasenschiebers (7) eine Phasenverschiebung des zweiten Mischsignals von -90 Grad vorgenommen wird.

7. Schaltungsanordnung nach Anspruch 1, **dadurch gekennzeichnet,**
**daß** der erste Phasenschieber (6) zusätzlich dazu herangezogen wird, vor der Aufzeichnung vorgenommene Phasenverschiebungen des Farbsignals rückgängig zu machen.

8. Schaltungsanordnung nach Anspruch 1, **dadurch gekennzeichnet,**
**daß** das auf die dritte Trägerfrequenz umgesetzte signal einer in einer Farbsignal-Norm vorgesehenen Farbträgerfrequenz entspricht.

## Claims

1. A circuit arrangement for processing a color signal reproduced from a record carrier, preferably a video tape, and modulated on a carrier wave of a first carrier frequency (color-under signal), in which circuit arrangement the color signal modulated on the first carrier frequency is applied to a first mixer (1) of the circuit arrangement, which first mixer converts the color signal into a second carrier frequency by mixing it with a first mixing signal and whose output signal is applied to a comb filter circuit (2, 3, 4) of the circuit arrangement whose output signal is applied to a second mixer (5) of the circuit arrangement, which second mixer converts the comb-filtered signal into a third carrier frequency by mixing it with a second mixing signal, **characterized in that** the first mixing signal is subjected to a first phase shift of a given magnitude by a first phase shifter (6) of the circuit arrangement after a given number of picture lines of the color signal, said first phase shift being each time effected in addition to the previously applied phase shifts and being selected so as to compensate for the possible non-integral ratio between the period of one picture line and the period of the color signal modulated on the first carrier frequency, such that a period of the color carrier wave on the input of the comb filter circuit (2, 3, 4) begins at the beginning of a next picture line, which follows said given number of picture lines, and **in that** a second phase shifter (7) of the circuit arrangement subjects the second mixing signal to a second phase shift of the same magnitude as the first phase shift but of opposite sign thereto at the same instants.

2. A circuit arrangement as claimed in Claim 1, **characterized in that** the first phase shift is applied such that a period of the color carrier wave associated with a given pixel of the picture line, preferably the first active pixel of the picture line, begins at the beginning of the next picture line.

3. A circuit arrangement as claimed in Claim 1, **characterized in that** the first phase shift is applied during time intervals in which the picture lines have no picture content.

4. A circuit arrangement as claimed in Claim 1, **characterized in that** the first phase shift is applied during the horizontal synchronization pulses present in the picture lines.

5. A circuit arrangement as claimed in Claim 1, **characterized in that**, for processing a color signal in accordance with the NTSC standard available in the color-under frequency mode, the first phase shifter (6) shifts the phase of the first mixing signal by +90 degrees after every picture line, and the second phase shifter (7) shifts the phase of the second mixing signal by -90 degrees after the same picture lines.

6. A circuit arrangement as claimed in Claim 1, **characterized in that**, for processing a color signal in accordance with the PAL standard available in the color-under frequency mode, the first phase shifter (6) shifts the phase of the first mixing signal by +90 degrees after every second picture line, and the second phase shifter (7) shifts the phase of the second mixing signal by -90 degrees after the same picture lines.

7. A circuit arrangement as claimed in Claim 1, **characterized in that** the first phase shifter (6) is used, in addition, for canceling phase shifts of the color signal introduced before recording.

8. A circuit arrangement as claimed in Claim 1, **characterized in that** the signal converted into the third carrier frequency complies with a color carrier frequency in accordance with a color signal standard.

## Revendications

1. Circuit de traitement d'un signal couleur (*color-under signal*) lu par un support d'enregistrement, de préférence une bande vidéo et modulé sur un support avec une première fréquence porteuse dans lequel le signal couleur modulé sur la première fréquence porteuse est amené à un premier mélangeur du circuit (1) à l'aide duquel le signal couleur est converti par mélange avec un premier signal de mélange sur une deuxième fréquence porteuse et dont le signal de sortie est amené à un dispositif de filtre en peigne (2, 3, 4) du circuit dont le signal de sortie est amené à un deuxième mélangeur (5) du circuit à l'aide duquel le signal à filtrage en peigne est converti à l'aide du mélange avec un deuxième signal de mélange à une troisième fréquence porteuse, **caractérisé en ce**
**que** le premier signal de mélange est respectivement soumis à un premier déphasage d'une grandeur à déterminer préalablement après un nombre à déterminer préalablement de lignes d'image du signal couleur à l'aide d'un premier déphaseur (6) du circuit, auquel cas le premier déphasage est à chaque fois effectué en plus des déphasages intervenus précédemment et sélectionné de telle sorte qu'une compensation du rapport qui, éventuellement, n'est pas un nombre entier, de la durée d'une ligne d'image et la durée de la période du signal couleur modulé sur la première fréquence porteuse soit atteinte, de telle sorte qu'à l'entrée du dispositif de filtre en peigne (2, 3, 4), une période de l'oscillation porteuse couleur commence au début d'une ligne d'image suivante qui suit ledit nombre de lignes d'image à déterminer préalablement et que le deuxième signal de mélange soit soumis aux mêmes moments à l'aide d'un deuxième déphaseur (7) du circuit à un deuxième déphasage de même grandeur que le premier déphasage mais de signe inverse.

2. Circuit selon la revendication 1, **caractérisé en ce**
**que** ledit premier déphasage est conçu de telle sorte qu'au début de la ligne d'image suivante, commence une période de l'oscillation porteuse couleur attribuée à un pixel préalablement déterminé de la ligne d'image, de préférence au premier pixel actif de la ligne d'image.

3. Circuit selon la revendication 1, **caractérisé en ce**
**que** le premier déphasage est effectué pendant les périodes durant lesquelles les lignes d'image ne présentent pas de contenu d'image.

4. Circuit selon la revendication 1, **caractérisé en ce**
**que** le premier déphasage est effectué pendant des impulsions synchrones horizontales prévues dans les lignes d'image.

5. Circuit selon la revendication 1, **caractérisé en ce**
**que**, pour le traitement d'un signal couleur de norme NTSC présent dans une position de fréquence *color-under,* un déphasage du premier signal de mélange de +90 degrés est effectué à l'aide du premier déphaseur (6) après chaque ligne d'image et qu'après les mêmes lignes d'image à l'aide du deuxième déphaseur (7), un déphasage du deuxième signal de mélange de -90 degrés est effectué.

6. Circuit selon la revendication 1, **caractérisé en ce**
**que**, pour le traitement d'un signal couleur de norme PAL présent dans la position de fréquence *color-under,* un déphasage du premier signal de mélange de +90 degrés est effectué à l'aide du premier déphaseur (6) après chaque deuxième ligne d'image et qu'après les mêmes lignes d'image à l'aide du deuxième déphaseur (7), un déphasage du deuxième signal de mélange de -90 degrés est effectué.

7. Circuit selon la revendication 1, **caractérisé en ce**
**que** le premier déphaseur (6) est utilisé en plus pour neutraliser les déphasages du signal couleur effectué avant l'enregistrement.

8. Circuit selon la revendication 1, **caractérisé en ce**
**que** le signal converti à la troisième fréquence porteuse correspond à une fréquence porteuse couleur prévue dans une norme de signal couleur.
